# EUROPÄISCHE PATENTSCHRIFT

(11) **EP 0 965 117 B1**
(45) Veröffentlichungstag und Bekanntmachung des Hinweises auf die Patenterteilung: **09.10.2002**
(21) Anmeldenummer: 98909479.2
(22) Anmeldetag: 26.02.1998
(51) Int. Cl.: G08G 1/015

(54) **VORRICHTUNG UND VERFAHREN ZUM ERFASSEN EINES OBJEKTS IN EINEM VORGEGEBENEN RAUMBEREICH, INSBESONDERE VON FAHRZEUGEN FÜR DIE VERKEHRSÜBERWACHUNG**
DEVICE AND METHOD TO DETECT AN OBJECT IN A GIVEN AREA, ESPECIALLY VEHICLES, FOR THE PURPOSE OF TRAFFIC CONTROL
DISPOSITIF ET PROCEDE POUR DETECTER UN OBJET DANS UNE ZONE PREDETERMINE, NOTAMMENT DES VEHICULES, AUX FINS DE LA SURVEILLANCE DU TRAFIC.

(30) Priorität: 27.02.1997 DE 19708014
(43) Veröffentlichungstag der Anmeldung: 22.12.1999
(73) Patentinhaber: Hörber, Ernst, 91616 Neusitz (DE)
(72) Erfinder: Hörber, Ernst, 91616 Neusitz (DE)
(74) Vertreter: HOFFMANN - EITLE
(86) Internationale Anmeldenummer: EP9801102
(87) Internationale Veröffentlichungsnummer: WO98038616

(56) Entgegenhaltungen:
- DE-A- 4 304 298
- DE-A- 4 411 994
- DE-A- 4 421 140
- US-A- 3 872 283
- US-A- 5 546 188
- TARIK HUSSAIN ET AL: "OVERHEAD INFRARED VEHICLE SENSOR FOR TRAFFIC CONTROL" PERSONAL COMMUNICATION - FREEDOM THROUGH WIRELESS TECHNOLOGY, SECAUCUS, NJ., MAY 18 - 20, 1993, Nr. CONF. 43, 18.Mai 1993, INSTITUTE OF ELECTRICAL AND ELECTRONICS ENGINEERS, Seiten 351-355, XP000393194
- PATENT ABSTRACTS OF JAPAN vol. 096, no. 009, 30.September 1996 & JP 08 124081 A (MITSUBISHI HEAVY IND LTD), 17.Mai 1996,

## Beschreibung

Die vorliegende Erfindung betrifft eine Vorrichtung und ein Verfahren zum Erfassen eines Objekts in einem vorgegebenen Raumbereich, insbesondere von Fahrzeugen für die Verkehrsüberwachung gemäß dem Oberbegriff des Anspruchs 1 bzw. des Anspruch 10.

Eine Vorrichtung dieser Art ist aus DE 42 34 880 bekannt. Die Vorrichtung zur Erfassung und Erkennung von auf einer Fahrbahn befindlichen Fahrzeugen umfaßt zwei eng fokusierte Abstandssensoren, um gleichzeitig Fahrtrichtung, Geschwindigkeit und Fahrzeuglänge bestimmen zu können. Durch eine Messung der Fahrzeughöhe, die aus den gemessenen, unterschiedlichen Entfernungswerten ermittelt wird, ist eine Klassifizierung des Fahrzeugtyps möglich. Hierbei sind die Abstandssensoren in Fahrtrichtung voneinander in einem Abstand angeordnet, der wesentlich kleiner als die Länge des Fahrzeugs ist. Zudem haben Abstandssensoren den Vorteil gegenüber gewöhnlichen Reflexlichtschranken, daß eine höhere Zuverlässigkeit und ein besseres Detektionsverhalten erreicht wird, da Ungenauigkeiten aufgrund einer Unterscheidung von Strahlen, die von einem sich bewegenden Fahrzeug bzw. von der Straße reflektiert werden, verringert wird. Zur Ermittlung der Geschwindigkeit, Länge und Fahrtrichtung des Fahrzeugs wird eine Pulslaufzeitmessung durchgeführt. Ein Zeitmesser mißt dazu die Zeit, die zwischen dem Erfassen des Fahrzeugs durch den ersten bzw. zweiten Sensor verstreicht.

Aus der US-Patentschrift US 5,321,490 ist ein elektronischer Objektsensor zur Erfassung von Gegenständen, die sich in der Nähe des Sensors befinden, bekannt. Zwei voneinander divergierende, fokusierte, pulsförmige Laserstrahlen werden auf das zu untersuchende Gebiet gerichtet. Die beiden Strahlen werden aus einem einzigen, von einer Laserdiode emittierten Laserstrahl mit Hilfe eines Prismas erzeugt. Der Objektsensor umfaßt einen Emfänger zum Erfassen der von einem Objekt in dem Beobachtungsbereich reflektierten Strahlen. Die Laufzeit, die ein von dem Sender emittierter pulsförmiger Strahl bis zum Erfassen durch den Empfänger benötigt, wird gemessen. Die Geschwindigkeit eines Objekts in dem Beobachtungsgebiet wird aus dem Abstand berechnet, den die beiden Laserstrahlen auf der Straßenoberfläche beschreiben, und der Zeit, die zwischen dem Erfassen des Fahrzeugs durch den ersten Strahl und dem Erfassen durch den zweiten Strahl verstreicht.

Aus dem Empfang mehrerer aufeinanderfolgender Impulse kann auf die Anzahl der Fahrzeuge, auf die Fahrzeuggröße und -form, und damit auf den Fahrzeugtyp zurückgeschlossen werden.

Eine Schwierigkeit bei den bekannten Systemen besteht allerdings hinsichtlich stark schwankender Signalamplituden, die sich aufgrund der unterschiedlichen Reflektionseigenschaften der Oberflächen ergeben, von denen die das Licht zurückgeworfen wird (z.B. Straßenoberfläche, Kunststoffteile, Windschutzscheibe oder schwarzen Metallteile). Das bedeutet, daß gleichbeabstandete Oberflächen zwar Empfangssignale mit im wesentlichen gleicher Laufzeit aber unterschiedlicher Signalamplitude hervorrufen, was zu Schwierigkeiten bei der Bestimmung und Festlegung des Empfangszeitpunkts des reflektierten Signals führt. Dies verursacht im allgemeinen eine Unsicherheit in der Zeitmessung des Eintretens des Objekts in den Laserstrahl, und benötigt von daher besondere Vorkehrungen, beispielsweise einen weiteren Detektor, um diesen Fehler korrigieren zu können.

Der vorliegenden Erfindung liegt das Problem zugrunde, bei Erfassung eines Objekts in einem vorgegebenen Raumbereich, insbesondere von Fahrzeugen für die Verkehrsüberwachung die bei Laufzeitmessungen auftretenden Ungenauigkeiten zu vermeiden.

Dieses Problem wird erfindungsgemäß durch die im Patentanspruch 1 beschriebene Vorrichtung sowie durch das in Patentanspruch 10 beschriebene Verfahren gelöst. Vorteilhafte Ausgestaltungen ergeben sich aus den Unteransprüchen.

Ein zentraler Gedanke besteht dabei darin, daß die Erfassung des Objekts in einem bestimmten Bereich durch einen Vergleich eines beobachteten (gemessenen) Momentanwertemusters mit einem in einer Kalibriertabelle gespeicherten zuvor ermittelten Momentanwertemusters erfolgt.

Die mit der Erfindung erzielten Vorteile bestehen insbesondere darin, daß eine Entfernungsmessung durch das Erfassen eines einzigen zurückgestreuten oder reflektierten Strahlungsimpulses ermittelt werden kann, ohne daß ein Zeitnehmer benötigt wird. Bei der Erfindung wird die Messung der Laufzeit eines abgestrahlten Impulses vollständig vermieden.

Bei Verkehrsüberwachung können Verkehrsparameter wie beispielsweise Zahl der Fahrzeuge, Fahrtrichtung und Entfernung zwischen den Fahrzeugen, sowie Fahrzeuggeschwindigkeit, Typ, Höhe und Länge erfaßt werden. Zudem ermöglicht die Erfindung in vorteilhafter Weise ein Erfassen von stationären Fahrzeugen innerhalb eines beliebig gewählten Zeitintervalls. Durch eine Erfassung von mehreren sukzessiven zurückgestreuten und reflektierten Impulsen ist es möglich, ein Profil eines Fahrzeugs zu ermitteln. Durch einen Vergleich mit unterschiedlichen in einer Mikroprozessoreinheit gespeicherten Mustern oder charakteristischen Merkmalen können Fahrzeugtypen erkannt werden.

Ein weiterer Vorteil der Erfindung liegt darin, daß die Vorrichtung bei allen Wettersituationen eingesetzt werden kann, aufgrund der verwendeten Wellenlänge des Senders. Zusätzlich stellt die Vorrichtung ein Bauelement dar, das präzise, zuverlässig und preisgünstig ist und nur geringer Wartung bedarf.

Durch eine Anordnung von drei Paaren ausgerichteter Laserdioden, deren mittleres Paar so angeordnet ist, daß die Strahlung senkrecht bezüglich des Beobachtungsbereichs ausgerichtet wird, und die Paare zur Linken und Rechten des mittleren Paars um ca. +/- 12° geneigt sind, kann ein Erfassen der gesamten Fahrbahn erreicht werden. Dabei ist die Vorrichtung vertikal zu der Fahrbahnoberfläche ausgerichtet. Jedoch kann die Vorrichtung auch horizontal und mobil in Fahrzeugen angebracht werden. Für die Erfassung von Verkehrsdaten einer mehrspurigen Fahrbahn können eine Mehrzahl von Sensorvorrichtungen parallel betrieben werden. Eine derartige Ausführungsform der Erfindung kann ebenso zur Verkehrssteuerung benutzt werden.

Jedoch ist die Anwendung des erfindungsgemäßen Prinzips nicht auf die Verkehrsüberwachung beschränkt. Eine weitere Anwendung der Erfindung ist beispielsweise die Sicherheitsüberwachung von Räumen.

Eine detailierte Beschreibung der erfindungsgemäßen Vorrichtung und des erfindungsgemäßen Verfahrens erfolgt im folgenden anhand der Zeichnungen, in denen zeigt:
- Figur 1: eine schematische Darstellung eines Ausführungsbeispiels der Erfindung;
- Figur 2: eine schematische Darstellung einer Einrichtung zur Erfassung von Momentanwerten; und
- Figur 3: ein zeitabhängiges Detektionssignal, das der Empfänger aufgrund der aus dem überwachten Raumbereich zurückgestreuten oder reflektierten Strahlung liefert.

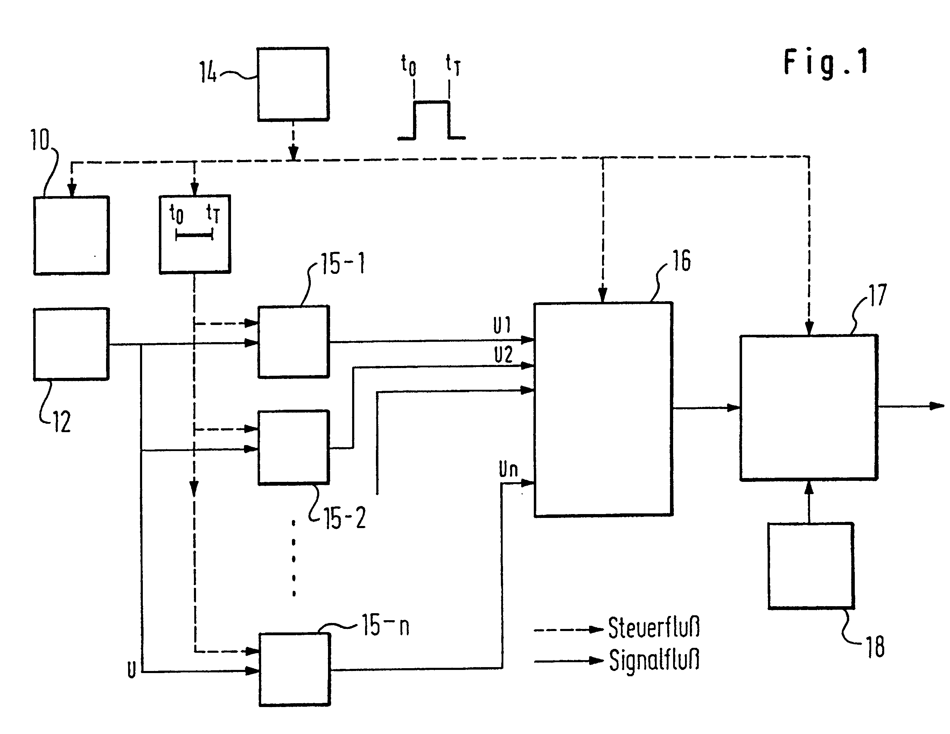

Das in Figur 1 schematisch dargestellte Ausführungsbeispiel einer Vorrichtung gemäß der Erfindung umfaßt einen Sender 10, der einen pulsförmigen Energiestrahl in Richtung eines zu überwachenden Bereichs, beispielsweise oberhalb einer Straße aussendet. Der Sender 10 ist vorzugsweise eine Laserdiode, deren Licht eine Wellenlänge im Nahinfrarotbereich von typischerweise 860 nm aufweist. Durch die Verwendung einer Laserdiode der Klasse 1 ist eine Gefährdung des menschlichen Auges ausgeschlossen und durch die gewählte Wellenlänge wird sichergestellt, daß die emittierte Strahlung durch äußere Faktoren, wie beispielsweise schlechte Sicht oder Dunkelheit kaum beeinträchtigt wird. Die Ausgangsleistung der Lasersdiode beträgt typischerweise 200 µW Watt.

Bei der Anwendung zur Verkehrsüberwachung wird der Sender 10 vorzugsweise so über der zu beobachtenden Fahrbahn angebracht (nicht dargestellt), daß die Strahlung senkrecht in Richtung Fahrbahn ausgestrahlt wird.

Das Abgabe von Laserimpulsen durch den Sender 10 wird durch eine Steuereinheit 14 gesteuert, indem die Steuereinheit 14 ein Steuersignal an den Sender 10 abgibt, das durch seine ansteigende Flanke den Laserimpuls auslöst. In der Praxis haben die erzeugten Laserimpulse eine Wiederholungsrate von 30 kHz. Die Halbwertsbreite eines einzelnen Impulses ist typischerweise 15 ns.

Der Laserstrahl wird durch eine dem Sender vorgeschaltete Optik (nicht dargestellt) beeinflußt, beispielsweise fokusiert, damit für die Beobachtung von Fahrzeugen im Straßenverkehr ein gepulster Strahl geeigneter Geometrie zur Verfügung steht. In diesem Zusammenhang sei erwähnt, daß für die Erfassung bzw. Erkennung von Objekten im Raum, beispielsweise hervorgerufen durch eine sich bewegende Person, einen Strahl hoher Divergenz mit vorzugsweise einer quasi-isotropen Abstrahlcharakteristik benutzt wird, um eine räumliche Erfassung zu gewährleisten.

Wie zuvor bereits erwähnt, wird der gepulste Strahl in einen Beobachtungsbereich abgestrahlt, in dem sich ein Objekt befindet. Die von diesem Objekt zurückgestreute oder reflektierte Strahlung wird durch den Empfänger 12 erfaßt. Der Empfänger 12 liefert daraufhin für jeden individuell empfangenen Impuls ein zeitabhängiges Detektionssignal U(t). Das Steuersignal, mit dem im Sender die Abgabe des Impulses ausgelöst wird, wird zumindest zwei Einrichtungen 15-1, 15-2, ... , 15-n zur Erfassung von Momemtanwerten des Detektionssignals U(t) zugeführt. Vorzugsweise wird das Steuersignal um eine vorgegebene Zeitspanne verzögert, so daß die Erfassung von Momentanwerten erst beginnt, wenn der reflektierte Impuls tatsächlich beim Empfänger eintrifft. In Fig. 1 ist der von der Steuereinheit 14 abgegebene Steuerimpuls mit einer Impulsdauer t_{T} - t₀ dargestellt. Hierbei bezeichnet t₀ den Start des Steuerimpulses und t_{T} das Ende des Steuerimpulses. tᵢ bezeichnet den Beginn eines entsprechenden Meßintervals, was im folgenden noch näher erläutert wird.

Das Erfassungssignal U(t) wird den Einrichtungen 15-1, 15-2, ... , 15-n zur Erfassung von Momentanwerten des Detektionssignals U(t) zugeführt, bei denen es sich in dem hier beschriebenen Ausführungsbeispiel um Momentanspannungsmessern 15-1, 15-2, ... , 15-n zur Messung von Momentanspannungen in entsprechenden Zeitintervallen handelt. Die Meßintervalle werden von der Steuereinheit 14 festgelegt und sind derart, daß aus Gründen der Empfindlichkeit die Breite der Intervalle die Impulsbreite des empfangenen reflektierten Impulses nicht wesentlich überschreiten. Die Intervalle können unterschiedlich breit sein und sich zeitlich überlappen. Sie sollten jedoch den gesamten Zeitbereich vollständig überdecken, um "blinde" Entfernungsbereiche zu vermeiden. Die Anzahl der Meßintervalle kann entsprechend der geforderten Meßgenauigkeit optimiert werden, jedoch muß jeder empfangene Impuls in mindestens zwei, voneinander zeitlich verschobenen Meßintervallen nachweisbar sein.

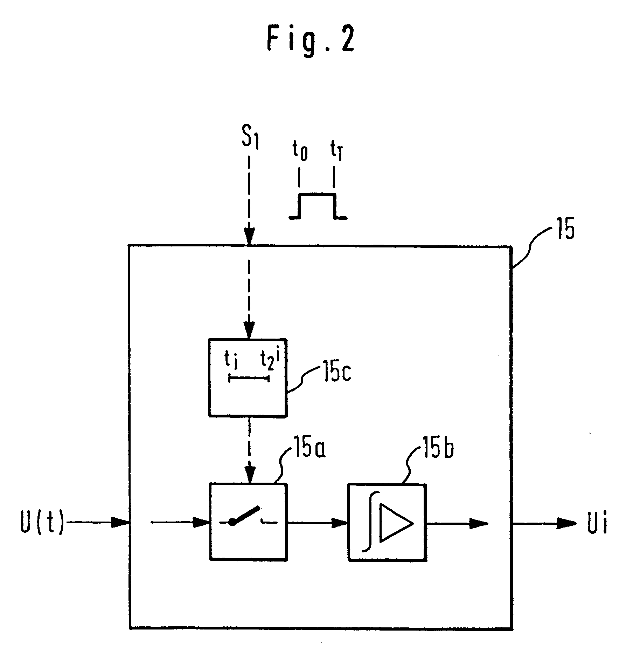

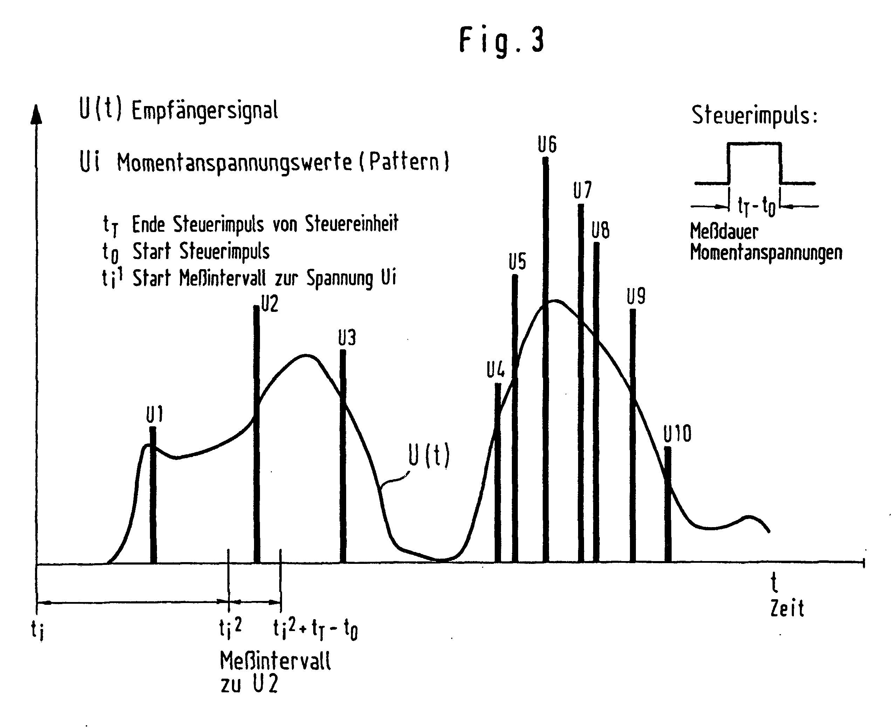

Wie aus Figur 2 ersichtlich, umfaßt jeder Momentanspannungsmesser 15 einen im nicht angesteuerten Zustand geöffneten Schalter 15a und einen integrierenden Verstärker 15b zur Messung einer Momentanspannung Ui des Detektionssignals U(t) innerhalb eines bestimmten Meßzeitbereich. Der Steuerimpuls von der Steuereinheit 14 wird über eine Verzögerungsschaltung 15c dem Schalter 15a zugeführt mit der Folge, daß der Steuerimpuls von der Steuereinheit 14 nach einer bestimmten Verzögerung den Schalter 15a des Momentanspannungsmessers 15 für ein vorgegebenes Zeitintervall schließt. Dabei erfolgt das Schließen der Schalter 15a der unterschiedlichen Momentanspannungsmesser 15-1, 15-2, ... , 15-n zeitlich voneinander versetzt, so daß der gesamte Meßbereich in dem die zurückgestreute oder reflektierte Strahlung empfangen werden kann, vollständig abgedeckt ist. Somit liefert jeder Momentanspannungsmesser 15-1, 15-2, ... , 15-n einen momentanen Spannungswert U1, U2,..., Un des Detektionssignals U(t), wie in Figur 3 für zehn verschiedene Momentanspannungswerte (U1 - U10) dargestellt. Auf diese weise erhält man erfindungsgemäß aus dem zeitabhängigen Detektionssignal U(t) einen Satz von Momentanspannungswerten. Es sei erwähnt, daß der Momentanspannungswert Uᵢ das Spannungsintegral über das Intervall i sein kann, oder die Spannung am Intervallende, oder ein anderer für das Intervall charakteristischer Wert. Insgesamt entsteht für jeden vom Empfänger erfaßten Impuls ein Satz von n Momentanspannungswerten U1, U2,..., Un.

Die Momentanspannungswerte U1, U2,..., Un werden bei dem in Fig. 1 gezeigten Ausführungsbeispiel anschließend an eine Einrichtung 16 zur Digitalisierung, die einen Multiplexer und einen Analog/Digitalwandler umfaßt (nicht dargestellt), weitergeleitet. Die Auswertung erfolgt anschließend in einer Auswertungseinrichtung 17, der die digitalisierten Werte zugeführt werden und die vorteilhaft einen Mikroprozessor umfaßt, mit dessen Hilfe die digitalisierten Werte verarbeitet werden.

In einer bevorzugten Ausgestaltung wird aus den von jedem Meßimpuls erhaltenen Momentanspannungswerten ein Satz von Quotienten benachbarter Momentanspannungswerte Uᵢ/Uᵢ₊₁ errechnet. Auf diese Weise wird für jeden vom Sender 10 abgestrahlten Meßimpuls ein Quotienten-Muster (oder Momentanspannungsmuster) ermittelt. Durch einen anschließenden Vergleich des Momentanspannungsmusters mit experimentell ermittelten Momentanspannungsmustern, die in einer Kalibriertabelle 18, die mit der Auswerteeinrichtung 17 verbunden ist, gespeicherten sind, kann die Entfernung zwischen einem sich in dem Beobachtungsbereich befindenden Objekts und der Meßvorrichtung direkt ermittelt werden. Für die Anwendung im Rahmen der Verkehrsüberwachung bedeutet das: Weicht die ermittelte Entfernung von der konstanten Entfernung zwischen Meßvorrichtung und Straße ab, wird auf diese Weise die Präsenz eines Fahrzeugs in dem überwachten Raumbereich festgestellt.

Für ein sich in dem Beobachtungsgebiet bewegendes Objekt kann aus der Erfassung sukzessiv abgestrahlter und von der Empfängereinrichtung empfangener Impulse aufgrund der sich von Impuls zu Impuls ändernden Entfernung das Profil des Objekts ermittelt werden, das charakteristisch für das sich bewegende Objekt ist. Beispielsweise im Falle einer Verkehrsüberwachung kann somit ein Profil sich bewegender Fahrzeuge ermittelt und darüber der Fahrzeugtyp klassifiziert werden.

Durch die Anordnung einer zweiten identisch aufgebauten Meßvorrichtung, die in Bewegungsrichtung des Objektes mit Abstand zur der ersten Meßvorrichtung angeordnet ist, kann die Geschwindigkeit eines sich bewegenden Objekts ermittelt werden. Jede der Meßvorrichtungen emittiert einen fokussierten pulsförmigen Laserstrahl in Richtung des Beobachtungsbereichs. Ein sich bewegendes Objekt wird dann von der ersten Meßvorrichtung wie oben beschrieben registriert und daraufhin ein Momentanspannungsmuster gebildet. Durch den Empfang sukzessiver Strahlungsimpulse wird somit, wie zuvor diskutiert, ein Profil des sich bewegenden Objekts ermittelt. Aufgrund der Bewegung des Objekts wird dieses von der zweiten Meßvorrichtung ebenfalls erfaßt und ein weiteres Profil des sich bewegenden Objekts wird ermittelt. Im Anschluß kann die Zeit ermittelt werden, die zwischen dem Registrieren des Objekts durch die erste Meßvorrichtung und durch die zweite Meßvorrichtung verstreicht. Mittels der gemessenen verstrichenen Zeit kann die Geschwindigkeit des Objekts ermittelt werden.

## Patentansprüche

1. Vorrichtung zum Erfassen eines Objekts in einem vorgegebenen Raumbereich, insbesondere von Fahrzeugen für die Verkehrsüberwachung, umfassend
- mindestens einen Sender (10) zum Erzeugen und Abstrahlen von Strahlungsimpulsen in den vorgegebenen Raumbereich,
- mindestens einen Empfänger (12), der die aus dem vorgegebenen Raumbereich zurückgestreute oder reflektierte Strahlung empfängt und in Abhängigkeit von zurückgestreuten oder reflektierten Strahlung ein Detektionssignal (U(t)) abgibt,
**gekennzeichnet durch**
- zumindest zwei Einrichtungen (15) zur Erfassung von Momentanwerten (Ui) des Detektionssignals (U(t)) innerhalb entsprechender Zeitintervalle,
- eine Steuereinrichtung (14), die ein Steuersignal an den Sender (10) zum Auslösen der Abstrahlung eines Strahlungsimpulses und an die Einrichtung (15) zur Erfassung von Momentanwerten zum Festlegen der Zeitintervalle für die Erfassung der Momentantwerte abgibt, und
- eine Einrichtung (16, 17, 18) zum Vergleich eines aus den erfaßten Momentanwerten ableitbaren Wertemusters mit gespeicherten Wertemustern.

2. Vorrichtung nach Anspruch 1, **dadurch gekennzeichnet, daß** das Detektionssignal (U(t)) den zumindest zwei Einrichtungen (15) zur Erfassung von Momentanwerten parallel zugeführt wird.

3. Vorrichtung nach Anspruch 1 oder 2, **dadurch gekennzeichnet, daß** die Einrichtungen zur Erfassung von Momentanwerten Momentanspannungsmesser (15; 15-1, 15-2,..., 15-n) sind.

4. Vorrichtung nach Anspruch 3, **dadurch gekennzeichnet, daß** jeder Momentanspannungsmesser (15) jeweils einen Schalter (15a), der in nicht-angesteuertem Zustand geöffnet ist und der durch den Steuerimpuls von der Steuereinrichtung (14) betätigt wird, und einen integrierenden Verstärker (15b) umfaßt, dem das Detektionssignal (U(t)) bei geschlossenem Schalter (15a) zugeführt wird.

5. Vorrichtung nach einem der vorhergehenden Ansprüche **gekennzeichnet, durch** eine Einrichtung (16) zum Digitalisieren der erfaßten Momentanwerten und eine Auswerteeinrichtung (17) für die Ableitung eines Wertemusters aus den Momentanwerten und für den Vergleich des Wertemusters mit gespeicherten Wertemustern.

6. Vorrichtung nach Anspruch 5, **dadurch gekennzeichnet, daß** die gespeicherten Wertemuster in einer Kalibriertabelle abgelegt sind.

7. Vorrichtung nach Anspruch 6, **dadurch gekennzeichnet, daß** die in der Kalibriertabelle abgelegten Wertemuster bestimmten Entfernungen zugeordnet sind.

8. Vorrichtung nach einem der vorhergehenden Ansprüche, **dadurch gekennzeichnet, daß** der vom Sender (10) abgestrahlte Strahlungsimpuls für die Entfernungsmessung eng fokusiert wird.

9. Vorrichtung nach einem der Ansprüche 1 bis 7, **dadurch gekennzeichnet, daß** der vom Sender (10) abgestrahlte Strahlungsimpuls für die Raumüberwachung aufgefächert wird.

10. Verfahren zum Erfassen eines Objekts in einem vorgegebenen Raumbereich, insbesondere von Fahrzeugen für die Verkehrsüberwachung mit den Schritten:
- Emittieren zumindest eines Strahlungsimpulses in den vorgegebenen Raumbereich,
- Empfangen der aus dem vorgegebenen Raumbereich zurückgestreuten oder reflektierten Strahlung und
- Erzeugen eines Detektionssignals in Abhängigkeit von der aus dem vorgegebenen Raumbereich zurückgestreuten oder reflektierten Strahlung,
**gekennzeichnet durch** die Schritte
- Erfassen von Momentanwerte des Detektionssignals innerhalb von zumindest zwei Meßzeitintervallen,
- Ableiten eines Wertemusters aus den erfaßten Momentanwerten und
- Vergleichen des Wertemusters mit gespeicherten Wertemustern.

11. Verfahren nach Anspruch 10, **dadurch gekennzeichnet, daß** der Vergleich des Wertemusters anhand von in einer Kalibriertabelle gespeicherten Wertemustern durchgeführt wird.

12. Verfahren nach Anspruch 12, **dadurch gekennzeichnet, daß** der Vergleich zu einer in der Kalibriertabelle abgelegte Entfernung als Ergebnis führt.

13. Verfahren nach einem der Ansprüche 10 bis 12, daduch **gekennzeichnet**, daß die Meßzeitintervalle einen vorgegebenen Meßzeitbereich, in dem die zurückgestreute oder reflektierte Strahlung empfangen wird, nahezu vollständig überdecken.

14. Verfahren nach einem der Ansprüche 10 bis 13, **dadurch gekennzeichnet, daß** die Breite eines Meßzeitintervalls die Impulsbreite der empfangenen zurückgestreuten oder reflektierten Strahlung nicht überschreitet.

15. Verfahren nach einem der Ansprüche 10 bis 14, **dadurch gekennzeichnet, daß** jeder empfangene Impuls in mindestens zwei zeitlich voneinander verschobenen Meßintervallen nachweisbar ist.

16. Verfahren nach einem der Ansprüche 10 bis 15, **dadurch gekennzeichnet, daß** die Momentanwerte Momentanspannungswerte sind.

17. Vorrichtung nach einem der Ansprüche 1 bis 9 oder Verfahren nach einem der Ansprüche 10 bis 16, **dadurch gekennzeichnet, daß** der Strahlungsimpuls ein Laserlichtimpuls, vorzugsweise mit eine Wellenlänge von circa 860 nm ist.

18. Vorrichtung bzw. Verfahren nach Anspruch 17, **dadurch gekennzeichnet, daß** die Halbwertsbreite des Impulses etwa 15 ns beträgt.

19. Vorrichtung bzw. Verfahren nach einem der Ansprüche 17 oder 18, **dadurch gekennzeichnet, daß** die Wiederholungsrate des Impulses etwa 30 kHz beträgt.

## Claims

1. Device for detecting an object in a predetermined spatial region, in particular vehicles for purposes of traffic surveillance, comprising
- at least one transmitter (10) for generating and emitting radiation pulses into the predetermined spatial region,
- at least one receiver (12) which receives the radiation back-scattered or reflected from the predetermined spatial region and issues a detection signal (U(t)) as a function of the back-scattered or reflected radiation,
**characterized by**
- at least two devices (15) for capturing instantaneous values (Ui) of the detection signal (U(t)) within appropriate time intervals,
- a control device (14) which issues a control signal to the transmitter (10) for triggering the emission of a radiation pulse and to the device (15) for capturing instantaneous values to fix the time intervals for capturing the instantaneous values, and
- a device (16, 17, 18) for comparing a value pattern derivable from the captured instantaneous values with stored value patterns.

2. Device according to Claim 1, **characterized in that** the detection signal (U(t)) is fed in parallel to the at least two devices (15) for capturing instantaneous values.

3. Device according to Claim 1 or 2, **characterized in that** the devices for capturing instantaneous values are instantaneous voltmeters (15; 15-1, 15-2, ..., 15-n).

4. Device according to Claim 3, **characterized in that** each instantaneous voltmeter (15) each comprises a switch, which in the unaddressed state is open and which is actuated by the control pulse from the control device (14), and an integrating amplifier (15b) to which the detection signal (U(t)) is fed when the switch (15a) is closed.

5. Device according to one of the preceding claims **characterized by** a device (16) for digitising the captured instantaneous values and an evaluating device (17) for deriving a value pattern from the instantaneous values and for comparing the value pattern with stored value patterns.

6. Device according to Claim 5, **characterized in that** the stored value patterns are filed in a calibration table.

7. Device according to Claim 6, **characterized in that** value patterns filed in the calibration table are assigned to particular distances.

8. Device according to one of the preceding claims, **characterized in that** the radiation pulse emitted by the transmitter (10) is narrowly focused for the distance measurement.

9. Device according to one of Claims 1 to 7, **characterized in that** the radiation pulse emitted by the transmitter (10) is fanned out for the spatial surveillance.

10. Method for detecting an object in a predetermined spatial region, in particular vehicles for purposes of traffic surveillance, having the steps:
- emission of at least one radiation pulse into the predetermined spatial region,
- reception of the radiation back-scattered or reflected from the predetermined spatial region and
- generation of a detection signal as a function of the radiation back-scattered or reflected from the predetermined spatial region,
**characterized by** the steps:
- capture of instantaneous values of the detection signal within at least to measured time intervals,
- derivation of a value pattern from the captured instantaneous values and
- comparison of the value pattern with stored value patterns.

11. Method according to Claim 10, **characterized in that** the comparison of the value pattern is carried out on the basis of value patterns stored in a calibration table.

12. Method according to Claim 12 [sic], **characterized in that** the comparison results in a distance filed in the calibration table as the result.

13. Method according to one of Claims 10 to 12, **characterized in that** the measured time intervals almost completely cover a predetermined measured time range in which the back-scattered or reflected radiation is received.

14. Method according to one of Claims 10 to 13, **characterized in that** the width of a measured time interval does not exceed the pulse width of the received back-scattered or reflected radiation.

15. Method according to one of Claims 10 to 14, **characterized in that** each received pulse is detectable in at least two measured intervals time-shifted relative to one another.

16. Method according to one of Claims 10 to 15, **characterized in that** the instantaneous values are instantaneous voltage values.

17. Device according to one of Claims 1 to 9 or method according to one of Claims 10 to 16, **characterized in that** the radiation pulse is a laser light pulse, preferably having a wavelength of approximately 860 nm.

18. Device or method according to Claim 17, **characterized in that** the half-power width of the pulse is approximately 15 ns.

19. Device or method according to one of Claims 17 or 18, **characterized in that** the repeat rate of the pulse is approximately 30 kHz.

## Revendications

1. Dispositif pour détecter un objet dans une zone prédéterminée, notamment des véhicules, aux fins de la surveillance de trafic, comprenant :
- au moins un émetteur (10) pour créer et émettre des impulsions de rayonnement dans la zone prédéterminée,
- au moins un récepteur (12) qui reçoit le rayonnement rétrodiffusé ou réfléchi à partir de la zone prédéterminée et transmet un signal de détection (U(t)) en fonction du rayonnement rétrodiffusé ou réfléchi,
**caractérisé par**
- au moins deux dispositifs (15) pour détecter des valeurs instantanées (Ui) du signal de détection (U(t)) à l'intérieur d'un intervalle de temps correspondant,
- un dispositif de commande (14) qui transmet un signal de commande à l'émetteur (10) pour déclencher le rayonnement d'une impulsion de rayonnement et au dispositif (15) pour détecter les valeurs instantanées afin de déterminer l'intervalle de temps pour la détection des valeurs instantanées, et
- un dispositif (16, 17, 18) pour comparer un échantillon de valeurs pouvant être dérivé à partir des valeurs instantanées détectées avec des échantillons de valeurs mémorisés.

2. Dispositif selon la revendication 1, **caractérisé en ce que** le signal de détection (U(t)) est amené en parallèle au moins aux deux dispositifs (15) de détection des valeurs instantanées.

3. Dispositif selon la revendication 1 ou 2, **caractérisé en ce que** les dispositifs pour détecter des valeurs instantanées sont des voltmètres instantanés (15, 15-1, 15-2, ..., 15-n).

4. Dispositif selon la revendication 3, **caractérisé en ce que** chaque voltmètre instantané (15) comprend respectivement un interrupteur (15a) ouvert à l'état non excité et commandé par l'impulsion de commande du dispositif de commande (14), et un amplificateur (15b) intégrant auquel le signal de détection (U(t)) est amené lorsque l'interrupteur (15a) est fermé.

5. Dispositif selon l'une des revendications précédentes, **caractérisé par** un dispositif (16) pour la numérisation des valeurs instantanées détectées et un dispositif d'exploitation (17) pour la dérivation d'un échantillon de valeurs à partir des valeurs instantanées et pour la comparaison de l'échantillon de valeurs avec les échantillons de valeurs mémorisés.

6. Dispositif selon la revendication 5, **caractérisé en ce que** les échantillons de valeurs mémorisés sont déposés dans un tableau de calibrage.

7. Dispositif selon la revendication 6, **caractérisé en ce que** les échantillons de valeurs déposés dans le tableau de calibrage sont attribués à des distances définies.

8. Dispositif selon l'une des revendications précédentes, **caractérisé en ce que** l'impulsion de rayonnement émise par l'émetteur (10) est étroitement focalisée pour la mesure de distance.

9. Dispositif selon l'une des revendications 1 à 7, **caractérisé en ce que** l'impulsion de rayonnement émise par l'émetteur (10) est étalée pour la surveillance de la zone.

10. Procédé pour détecter un objet dans une zone prédéterminée, notamment des véhicules, aux fins de la surveillance de trafic, selon les étapes consistant à :
- émettre au moins une impulsion de rayonnement dans la zone prédéterminée,
- réceptionner le rayonnement rétrodiffusé ou réfléchi à partir de la zone prédéterminée et
- créer un signal de détection en fonction du rayonnement rétrodiffusé ou réfléchi à partir de la zone prédéterminée, **caractérisé par** les étapes consistant à
- détecter les valeurs instantanées du signal de détection à l'intérieur d'au moins deux intervalles de mesure,
- dériver un échantillon de valeurs à partir des valeurs instantanées détectées et
- comparer l'échantillon de valeurs avec les échantillons de valeurs mémorisés.

11. Procédé selon la revendication 10, **caractérisé en ce que** la comparaison de l'échantillon de valeurs est réalisée à l'aide d'échantillons de valeurs mémorisés dans un tableau de calibrage.

12. Procédé selon la revendication 12, **caractérisé en ce que** la comparaison par rapport à une distance déposée dans le tableau de calibrage donne un résultat.

13. Procédé selon l'une des revendications 10 à 12, **caractérisé en ce que** les intervalles de mesure recouvrent presque entièrement une zone de mesure prédéfinie dans laquelle le rayonnement rétrodiffusé ou réfléchi est reçu.

14. Procédé selon l'une des revendications 10 à 13, **caractérisé en ce que** la largeur d'un intervalle de mesure ne dépasse pas la largeur de l'impulsion du rayonnement rétrodiffusé ou réfléchi.

15. Procédé selon l'une des revendications 10 à 14, **caractérisé en ce que** chaque impulsion reçue est décelable dans au moins deux intervalles de mesure déplacés temporairement l'un par rapport à l'autre.

16. Procédé selon l'une des revendications 10 à 15, **caractérisé en ce que** les valeurs instantanées sont des voltages instantanés.

17. Dispositif selon l'une des revendications 1 à 9 ou procédé selon l'une des revendications 10 à 16, **caractérisé en ce que** l'impulsion de rayonnement est une impulsion de lumière laser, de préférence d'une longueur d'onde d'environ 860 mm.

18. Dispositif ou procédé selon la revendication 17, **caractérisé en ce que** la largeur de valeur moyenne de l'impulsion est d'environ 15 ns.

19. Dispositif ou procédé selon l'une des revendications 17 ou 18, **caractérisé en ce que** le taux de réitération de l'impulsion est d'environ 30 kHz.
